(19) Europäisches Patentamt
European Patent Office
Office européen des brevets

(11) **EP 2 966 821 A1**

(12) **EUROPEAN PATENT APPLICATION**

(43) Date of publication:
**13.01.2016 Bulletin 2016/02**

(51) Int Cl.:
*H04L 25/03* (2006.01)    *H04L 25/02* (2006.01)

(21) Application number: **14176803.6**

(22) Date of filing: **11.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Mitsubishi Electric R&D Centre Europe B.V.**
**1119 NS  Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventor: **Gresset, Nicolas**
**35708 RENNES Cedex 7 (FR)**

(74) Representative: **Maillet, Alain**
**Cabinet Le Guen Maillet**
**5, place Newquay**
**B.P. 70250**
**35802 Dinard Cedex (FR)**

(54) **Method for configuring a receiver receiving symbol vectors via a linear fading transmission channel**

(57)    For configuring a receiver receiving symbol vectors via a linear fading transmission channel, a configuring device : obtains candidate quantized channel matrices (S401); determines, for each candidate quantized channel matrix, pre-filtering parameters by optimizing a utility function according to the pre-filtering parameters in view of said candidate quantized channel matrix and from observations of the linear fading transmission channel, the utility function being representative of the receiver performance; selects one appropriate quantized channel matrix (S402) and the respective pre-filtering parameters according to the results of the utility function determined for each candidate quantized channel matrix and the respectively determined pre-filtering parameters; and configures the receiver (S407) such that the receiver applies, onto the received symbol vectors, a pre-filtering based on the selected pre-filtering parameters determined for the selected appropriate quantized channel matrix.

Fig. 4

**Description**

The present invention generally relates to configuring a wireless receiver for decoding symbols received via a linear fading transmission channel.

Usually, when a receiver processes symbols received via a linear fading transmission channel, a pre-filtering operation allows compensating irregularities of the geometrical shape of the linear fading transmission channel. One example of such advanced decoder is an MMSE-GDFE *(Minimum Mean Squared Error - Generalized Decision Feedback Equalizer)* decoder that makes a trade-off between channel orthogonal character and amount of useful signal injected in noise. Asymptotically, the goal of the pre-filtering is to provide an equivalent channel close to identity, *i.e.* an attempt to counter the fading effect of the transmission channel.

When performing a pre-coding operation by the wireless transmitter before transmitting symbols on a diagonal fading transmission channel or when transmitting symbols on a non-diagonal fading transmission channel, channel quantization allows obtaining an equivalent transmission channel having algebraic properties allowing a low complexity near-optimal decoding of the received symbols.

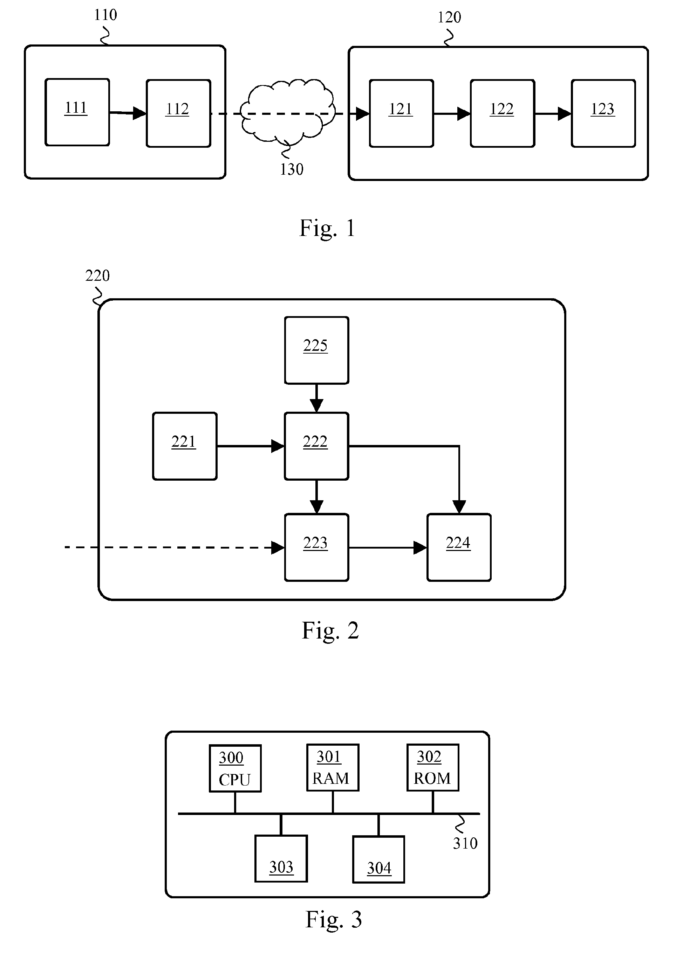

**Fig. 1** schematically represents a communication system as known from the prior art.

The communication system comprises a wireless transmitter 110 and a wireless receiver 120, the wireless transmitter 110 transmitting symbols to the wireless receiver 120 via a linear fading transmission channel 130.

The wireless transmitter 110 comprises a module 111 for generating constellation symbols, *i.e.* symbols matching a constellation representing possible symbols, which may be selected by an applied modulation scheme, as points in the complex plane.

The wireless transmitter 110 may further comprise a module 112 for performing a pre-coding operation, *e.g.* cyclotomic pre-coding, on the generated constellation symbols. The pre-coding operation takes several constellation symbols as input and provides a linear combination of said symbols as output. The presence of the module 112 for performing the pre-coding operation depends on the type of linear fading transmission channel in use. Indeed, when the fading transmission channel is diagonal, the pre-coding operation is performed in order to improve decoding performance. Otherwise, when the fading transmission channel is non diagonal, the pre-coding operation may be omitted. Hereinafter, a pre-coding matrix $\Phi$ is used to denote the potential pre-coding operation performed by the wireless transmitter 110. The pre-coding matrix $\Phi$ can therefore be identity (when no pre-coding operation is effectively performed) or be different from identity (when the pre-coding operation is effectively performed).

The wireless receiver 120 comprises a module 121 for performing a pre-filtering operation. The wireless receiver 120 further comprises a module 122 for performing channel quantization after pre-filtering. Channel quantization aims at reducing decoding complexity by relying on a simplified channel model, thus involving some inaccuracy in decoding which effect shall be as low as possible.

The wireless receiver 120 further comprises a module 123 for decoding the received symbols after application of the channel quantization, i.e. obtaining estimates of the constellation symbols generated by the module 111 of the wireless transmitter 110.

In the communication system shown in Fig. 1, the pre-filtering and channel quantization operations are independently configured. Indeed, SNR *(Signal-to-Noise Ratio)* optimization achieved by the pre-filtering operation is performed under an assumption of target identity channel, since a direct decision on the symbols resulting from the pre-filtering operation is performed. The channel quantization operation usually results in non-identity channels, and decisions are made on points in a reduced space, and then converted into estimated symbols by a basis change. Thus, both operations are not adapted one with each other, which results in sub-optimal decoding performance.

It is desirable to overcome the aforementioned drawbacks of the prior art.

In particular, it is desirable to provide a solution that allows improving decoding performance for symbols received by a receiver and resulting from a transmission of symbols by a wireless transmitter via a linear fading transmission channel.

To that end, the present invention concerns a method for configuring a receiver in a communication system, the receiver receiving symbol vectors *y* of size *n* resulting from a transmission of symbol vectors *z* of size *n* by a transmitter via a linear fading transmission channel, the method being performed by a configuring device adapted to configure the receiver, the configuring device obtaining a channel matrix $\Delta$ representative of observations of the linear fading transmission channel. The method comprises: obtaining a list *L* of candidate quantized channel matrices $\Delta_q$ satisfying the following relationship:

$$\Delta_q \Phi = \Phi \mathrm{T}$$

wherein $\Phi$ is a pre-coding matrix when the transmitter applies pre-coding operations before transmitting the symbols via the linear fading transmission channel and equals identity otherwise, and wherein each matrix T is unimodular; determining, for each candidate quantized channel matrix $\varDelta_q$, pre-filtering parameters by optimizing a utility function $g$ according to the pre-filtering parameters in view of said candidate quantized channel matrix $\varDelta_q$ and of the channel matrix $\Delta$, the utility function $g$ being representative of the receiver performance in view of a selected candidate quantized channel matrix $\varDelta_q$ and of the channel matrix $\Delta$; selecting one appropriate quantized channel matrix $\varDelta_q$ of said list $L$ and the respective pre-filtering parameters according to results of the utility function $g$ determined for each candidate quantized channel matrix $\varDelta_q$ and the respectively determined pre-filtering parameters; and, configuring the receiver such that the receiver applies, onto the received symbol vectors $y$, a pre-filtering based on the selected pre-filtering parameters, and such that the receiver makes a decision on symbols $z' = Tz$ to enable further converting the symbols $z'$ into estimates $z$ of the symbols $z$. Thus, a low complexity receiver with increased decoding performance due to a joint determination of the quantized channel matrix and of the pre-filtering parameters can be implemented.

According to a particular feature, the configuring device heuristically builds the list $\mathcal{L}$ of candidate quantized channel matrices $\varDelta_q$ by: generating a set of unimodular matrices T'; determining resulting quantized channel matrices $A_q'$ such that:

$$\Delta_q{}' = \Phi \mathrm{T}' \Phi^{\dagger}$$

and, retaining as candidate quantized channel matrices $\varDelta_q$ the resulting quantized channel matrices $\varDelta_q'$ that match an expected structure of the quantized channel matrices $\varDelta_q$ in view of the communication system, said structure being either diagonal complex matrices or complex matrices or space-time channel matrices, and retaining as matrices T the matrices T' that led to the retained candidate quantized channel matrices $\varDelta_q$. Thus, determining adequate quantized channel matrices $\varDelta_q$ is simple.

According to a particular feature, the matrix $\Phi$ is a pre-coding matrix corresponding to a cyclotomic rotation, the candidate quantized channel matrices $\varDelta_q$ are diagonal complex matrices and the configuring device algebraically builds list $\mathcal{L}$ of candidate quantized channel matrices $\varDelta_q$ from the fundamental units $u_i$ of the cyclotomic field represented as vectors of size n as follows:

$$\mathrm{diag}\, B_i = \sqrt{n}\, \Phi \mathrm{u}_i$$

$$\Delta_q = \prod_i B_i{}^{k_i}$$

wherein $B_i$ are diagonal matrices, $i$ being an index from 1 to n', n' being the quantity of the fundamental units of the cyclotomic field, and wherein $k$ represents a vector of size n', $k_i$ representing the $i$-th component of the vector $k$. Thus, adequate candidate quantized channel matrices $\varDelta_q$ can be easily determined.

According to a particular feature, considering a lattice having an $n \times n'$ generator matrix $G$ such that:

$$G = \log(|[\mathrm{diag}\, B_1, \dots, \mathrm{diag}\, B_{n'}]|)$$

the configuring device builds the list $\mathcal{L}$ of candidate quantized channel matrices $\varDelta_q$ by a list of lattice points selected at random, or by using a spherical construction gathering lattice points around the origin of the lattice within a radius $R$ as follows:

$$\|Gk\|^2 \leq R^2$$

Thus, good decoding performance can be achieved using a relatively low quantity of candidate quantized channel matrices $\varDelta_q$.

According to a particular feature, the matrix $\Phi$ is a pre-coding matrix corresponding to a cyclotomic rotation, the candidate quantized channel matrices $\Delta_q$ are diagonal complex matrices and the configuring device algebraically builds a list $L''$ of quantized channel matrices $\Delta''_q$ from the fundamental units $u_i$ of the cyclotomic field represented as vectors of size n as follows:

$$\mathrm{diag}\, B_i = \sqrt{n}\, \Phi u_i$$

$$\Delta''_q = \prod_i B_i^{k_i}$$

wherein $B_i$ are diagonal matrices, $i$ being an index from 1 to $n'$, $n'$ being the quantity of the fundamental units of the cyclotomic field, and wherein $k$ represents a vector of size $n'$, $k_i$ representing the $i$-th component of the vector $k$, and, considering a lattice having an n x $n'$ generator matrix $G$ such that:

$$G = \log(|[\mathrm{diag}\, B_1, \ldots, \mathrm{diag}\, B_{n'}]|)$$

the configuring device builds the list $L''$ of quantized channel matrices $\Delta''_q$ by using a spherical construction gathering lattice points around the origin of the lattice within a radius $R$ as follows:

$$\|Gk\|^2 \leq R^2$$

and the configuring device converts the channel matrix $\Delta$ into a point $\delta$ lying in the lattice, such that:

$$\delta = \frac{1}{\det(\Delta)} \log|\mathrm{diag}(\Delta)|$$

and the configuring device finds a vector $k$ such that $Gk$ is a point of the lattice which is close to the point $\delta$, and shifts, around the lattice point defined by the vector $k$, vectors $k''$ associated with the list $L''$ of quantized channel matrices $\Delta''_q$ that were centred around the origin of the lattice, and the configuring device builds the list $\mathcal{L}$ of candidate quantized channel matrices $\Delta_q$ as follows:

$$\log|\mathrm{diag}(\Delta''_q)| = Gk \;\; \text{and} \; \Delta_q = \prod_i B_i^{k_i + \hat{k}_i}$$

wherein $k$ represents a vector of size $n'$, $k_i$ representing the $i$-th component of the vector $k$ and $k_i$ representing the $i$-th component of the vector $k$. Thus, the quantity of candidate quantized channel matrices $\Delta_q$ in the list $L$ is further reduced, which further reduces the complexity of the configuring device.

According to a particular feature, the matrix $\Phi$ is a pre-coding matrix corresponding to a cyclotomic rotation, the candidate quantized channel matrices $\Delta_q$ are diagonal complex matrices and the configuring device algebraically builds a list $L''$ of quantized channel matrices $\Delta''_q$ from the fundamental units $u_i$ of the cyclotomic field represented as vectors of size n as follows:

$$\mathrm{diag}\, B_i = \sqrt{n}\, \Phi u_i$$

$$\Delta''_q = \prod_i B_i^{k_i}$$

wherein $B_i$ are diagonal matrices, $i$ being an index from 1 to $n'$, $n'$ being the quantity of the fundamental units of the cyclotomic field, and wherein $k$ represents a vector of size $n'$, $k_i$ representing the $i$-th component of the vector $k$, and, considering a lattice having an n x $n'$ generator matrix $G$ such that:

$$G = \log(|[\text{diag } B_1, \ldots, \text{diag } B_{n'}]|)$$

the configuring device builds the list $L''$ of quantized channel matrices $\Delta''_q$ by using a spherical construction gathering lattice points around the origin of the lattice within a radius R as follows:

$$\|Gk\|^2 \leq R^2$$

and the configuring device converts the channel matrix $\Delta$ into a point $\delta$ lying in the lattice, such that:

$$\delta = \frac{1}{\det(\Delta)} \log|\text{diag}(\Delta)|$$

and the configuring device finds a vector $\hat{k}$ such that $Gk$ is a point of the lattice which is close to the point $\delta$, and shifts, around the lattice point defined by the vector $k$, vectors $k''$ associated with the list $L''$ of quantized channel matrices $\Delta''_q$ that were centred around the origin of the lattice, and the configuring device builds a list of quantized channel matrices $\hat{\Delta}_q$ as follows:

$$\hat{\Delta}_q = \prod_i B_i^{\hat{k}_i}$$

wherein $\hat{k}_i$ represents the $i$-th component of the vector $\hat{k}$,

and the configuring device builds the list $\mathcal{L}$ of candidate quantized channel matrices $\Delta_q$ as follows:

$$\Delta_q = \Delta''_q \, \hat{\Delta}_q$$

Thus, the complexity for obtaining the shifted list of quantized channel matrices is reduced.

According to a particular feature, the selected pre-filtering parameters being represented by a matrix $F$, the receiver implementing a successive interference cancellation decoder, the configuring device determines a noise whitening filter, represented by a matrix $W$ that is an upper triangular matrix obtained by Cholesky decomposition and defined such that:

$$\Sigma(F)^{-1} = W^{\dagger}W$$

and the configuring device configures the receiver such that the receiver applies the noise whitening filter before making the decision on the symbols $z'$. Thus, whitened noise increases the decoding performance of the receiver.

According to a particular feature, the selected pre-filtering parameters being represented by a matrix $F$, the utility function $g$ depends on the covariance matrix $\Sigma(F)$ and is such that:

$$g\big(\Sigma(F)\big) = \max\Big|\log\big(\big|\text{diag}\,(\det(\Delta)^2\,\Phi\Sigma(F)\Phi^\dagger)\big|\big)\Big|$$

and the utility function $g$ has to be minimized. Thus, the utility function $g$ and the corresponding processing are simple.

According to a particular feature, the selected pre-filtering parameters being represented by a matrix $F$, the receiver implementing a zero-forcing decoder, the utility function $g$ depends on the covariance matrix $\Sigma(F)$ and is defined as the probability that an equivalent noise $\eta'$ is outside a complex hypersquare $S = [^{-1}/_2\ ^{1}/_2]^n + j[^{-1}/_2,\ ^{1}/_2]^n$, wherein $j$ represents the imaginary unit, such that:

$$\eta' = \Phi^\dagger\big(F\Delta - \Delta_q\big)\Phi z + \Phi^\dagger F\eta$$

$$g\big(\Sigma(F)\big) = \oint_{\eta'\notin S} \frac{1}{\pi^n\,\det\big(\Sigma(F)\big)}\exp\big(^{-1}/_2\,\eta'^\dagger\Sigma(F)^{-1}\eta'\big)\,d\eta'$$

wherein $\eta$ is an additive complex white Gaussian noise vector with unitary variance components encountered by the received symbol vectors $y$ via the linear fading transmission channel, and the utility function $g$ has to be minimized. Thus, the decoding performance of the receiver is optimized in case of zero-forcing decoding.

According to a particular feature, the selected pre-filtering parameters being represented by a matrix $F$, the receiver implementing a zero-forcing decoder, the utility function $g$ depends on the covariance matrix $\Sigma(F)$ and is such that:

$$g\big(\Sigma(F)\big) = trace\,\big(\Sigma(F)\big) = trace\,\Big(\rho\big(F\Delta - \Delta_q\big)\big(F\Delta - \Delta_q\big)^\dagger + FF^\dagger\Big)$$

wherein $\rho$ is a scalar such that $E[zz^\dagger] = \rho I$, being an identity matrix of size $n$, and $E[.]$ representing the mathematical expectation, and the utility function $g$ has to be minimized. Thus, a trade-off between optimality of the decoding performance of the receiver and implementation complexity is reached in case of zero-forcing decoding, thanks to an approximation of the utility function $g$.

According to a particular feature, the selected pre-filtering parameters being represented by a matrix $F$, the receiver implementing a successive interference cancellation decoder, the utility function $g$ depends on a Cholesky decomposition of the inverse covariance matrix $\Sigma(F)^{-1}$ and is such that:

$$g\big(\Sigma(F)\big) = 1 - \prod_i\Big(1 - Q\sqrt{\rho R_{i,i}^2}\Big) \simeq \sum_i \frac{1}{2}e^{-\rho R_{i,i}^2/2} \simeq \frac{1}{2}e^{-\min\big(\rho R_{i,i}^2/2\big)}$$

wherein R is an upper triangular matrix such that:

$$\Sigma(F)^{-1} = R^\dagger R$$

wherein $\rho$ is a scalar such that $E[zz^\dagger] = \rho I$, $I$ being an identity matrix of size $n$, and $E[.]$ representing the mathematical expectation, and wherein $Q$ represents the Marcum's error function, and the utility function $g$ has to be minimized. , the decoding performance of the receiver is optimized in case of successive interference cancellation decoding.

According to a particular feature, the selected pre-filtering parameters being represented by a matrix $F$, the receiver implementing a successive interference cancellation decoder, the utility function $g$ depends on a Cholesky decomposition of the covariance matrix $\Sigma(F)$ and is such that:

$$g\big(\Sigma(F)\big) = \max\left(M_{i,i}\right)$$

wherein M is a matrix such that:

$$\Sigma(F) = M^\dagger M$$

Thus, a trade-off between optimality of the decoding performance of the receiver and implementation complexity is reached in case of successive interference cancellation decoding, thanks to an approximation of the utility function $g$.

According to a particular feature, the pre-filtering parameters are defined so as to perform zero-forcing $\Delta^{-1}$ on the linear fading transmission channel and then force the linear fading transmission channel to be represented by the respective quantized channel matrix $\Delta_q$ as follows:

$$F = \Delta_q \Delta^{-1}$$

and the covariance matrix $\Sigma(F)$ is defined as follows:

$$\Sigma(F) = \Phi^\dagger \Delta_q \Delta^{-1} (\Delta^{-1})^\dagger \Delta_q{}^\dagger \Phi$$

Thus, determining the pre-filtering parameters is simple.

According to a particular feature, the pre-filtering parameters are defined so as to perform minimum mean squared error pre-filtering and a filtering by the respective quantized channel matrix $\Delta_q$ as follows:

$$F = \rho \Delta_q \Delta^\dagger (\rho \Delta \Delta^\dagger + I)^{-1}$$

and the covariance matrix $\Sigma(F)$ is defined as follows:

$$\Sigma(F) = \rho \Phi^\dagger \Delta_q (\rho \Delta \Delta^\dagger + I)^{-1} \Delta_q{}^\dagger \Phi$$

wherein $\rho$ is a scalar such that $E[zz^\dagger] = \rho I$, $I$ being an identity matrix of size $n$, and $E[.]$ representing the mathematical expectation. Thus, a trade-off between optimality and determination simplicity of the pre-filtering parameters can be reached.

According to a particular feature, the selected pre-filtering parameters being represented by a matrix $F$, the receiver implementing a zero-forcing decoder, the utility function $g$ is defined as the probability that an equivalent noise $\eta'$ is outside a complex hypersquare $S = [-1/2, 1/2]^n + j[-1/2, 1/2]^n$, wherein $j$ represents the imaginary unit, such that:

$$\eta' = \Phi^\dagger\big(F\Delta - \Delta_q\big)\Phi z + \Phi^\dagger F \eta$$

$$g(F) = E_z\left[\oint_{\eta' \notin S-m} \frac{1}{\pi^n \det(\Phi^\dagger F F^\dagger \Phi)} \exp(-\eta'^\dagger (\Phi^\dagger F F^\dagger \Phi)^{-1} \eta') \, d\eta'\right]$$

wherein $\eta$ is an additive complex white Gaussian noise vector with unitary variance components encountered by the received symbol vectors $y$ via the linear fading transmission channel, and wherein $m$ represents the mean of the equivalent

noise $\eta'$ and is expressed as follows:

$$m = \Phi^{\dagger}\left(F\Delta - \Delta_q\right)\Phi z$$

and wherein $E_z[.]$ represents the mathematical expectation performed over all symbol vectors z that could possibly be transmitted by the wireless transmitter via the linear fading transmission channel, and the pre-filtering parameters are numerically defined. Thus, optimality of the pre-filtering parameters can be reached.

The present invention also concerns a configuring device for configuring a receiver in a communication system, the receiver being adapted to receive symbol vectors y of size n resulting from a transmission of symbol vectors z of size n by a transmitter via a linear fading transmission channel, the configuring device comprising means for obtaining a channel matrix $\Delta$ representative of observations of the linear fading transmission channel. The configuring device further comprises: means for obtaining a list L of candidate quantized channel matrices $\Delta_q$ satisfying the following relationship:

$$\Delta_q \Phi = \Phi T$$

wherein $\Phi$ is a pre-coding matrix when the transmitter is adapted to apply pre-coding operations before transmitting the symbols via the linear fading transmission channel and equals identity otherwise, and wherein each matrix T is unimodular; means for determining, for each candidate quantized channel matrix $\Delta_q$, pre-filtering parameters by optimizing a utility function g according to the pre-filtering parameters in view of said candidate quantized channel matrix $\Delta_q$ and of the channel matrix $\Delta$, the utility function g being representative of the receiver performance in view of a selected candidate quantized channel matrix $\Delta_q$ and of the channel matrix $\Delta$; means for selecting one appropriate quantized channel matrix $\Delta_q$ of said list L and the respective pre-filtering parameters according to results of the utility function g determined for each candidate quantized channel matrix $\Delta_q$ and the respectively determined pre-filtering parameters; and means for configuring the receiver such that the receiver applies, onto the received symbol vectors y, a pre-filtering based on the selected pre-filtering parameters, and such that the receiver makes a decision on symbols z' = Tz to enable further converting the symbols z' into estimates z of the symbols z.

The present invention also concerns a computer program that can be downloaded from a communication network and/or stored on a medium that can be read by a computer or processing device. This computer program comprises instructions for causing implementation of the aforementioned method, when said program is run by a processor.

The present invention also concerns information storage means, storing a computer program comprising a set of instructions causing implementation of the aforementioned method, when the stored information is read from said information storage means and run by a processor.

Since the features and advantages related to the communication device and to the computer program are identical to those already mentioned with regard to the corresponding aforementioned method, they are not repeated here.

The characteristics of the invention will emerge more clearly from a reading of the following description of an example of embodiment, said description being produced with reference to the accompanying drawings, among which:

Fig. 1 schematically represents a communication system as known from the prior art;
Fig. 2 schematically represents an architecture of a wireless receiver according to the present invention;
Fig. 3 schematically represents a hardware platform enabling implementation of the wireless receiver;
Fig. 4 schematically represents an algorithm for configuring the wireless receiver; and
Fig. 5 schematically represents an algorithm for processing pre-coded symbols received by the wireless receiver via a linear fading transmission channel.

The following description is detailed in the context of a wireless transmitter transmitting symbols via a linear fading transmission channel to a wireless receiver. The principles described herein may however be applied in a broader communication context as far as the symbols are transmitted via a linear fading transmission channel, e.g. relying on a wired link or an optical link between a transmitter and a receiver.

**Fig. 2** schematically represents an architecture of a wireless receiver 220 according to the present invention.

The wireless receiver 220 is adapted to receive symbols transmitted via the linear fading transmission channel 130 by the wireless transmitter 110. The wireless receiver 220 aims at replacing the wireless receiver 120 in the communication system shown in Fig. 1 in order to improve decoding performance. In other words, the wireless receiver 220 is intended to receive and decode symbols transmitted by the wireless transmitter 110 via the linear fading transmission channel 130.

The wireless receiver 220 comprises a channel estimation module 221, a pre-filtering parameters computing module 222, a quantized channel providing module 225, a pre-filtering module 223 and a decoding module 224.

The channel estimation module 221 is adapted to observe the linear fading transmission channel 130 and to provide a channel matrix $\Delta$ representative of the observed channel to the pre-filtering parameters computing module 222.

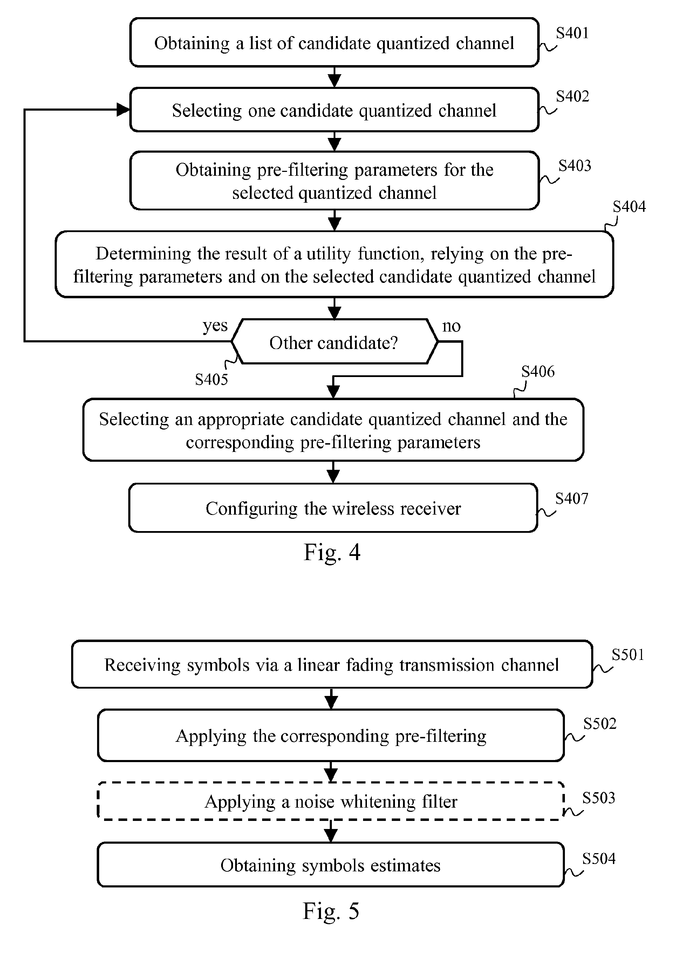

The quantized channel providing module 225 is adapted to provide a set of predefined quantized channel matrices $\Delta_q$ to the pre-filtering parameters computing module 222. One appropriate quantized channel matrix $\Delta_q$ is intended to be used as an equivalent matrix with regard to the linear fading transmission channel 130. The pre-filtering parameters computing module 222 is adapted to select said appropriate quantized channel matrix $\Delta_q$ according to results of a utility function, said results being obtained on the basis of the predefined quantized channel matrices $\Delta_q$ provided by the quantized channel providing module 225, of pre-filtering parameters respectively associated with the predefined quantized channel matrices $\Delta_q$ and dynamically defined according to the matrix $\Delta$ representing the observed channel. The utility function is representative of decoding performance (loss rate and/or processing latency and/or processing resources cost and/or data rate) of the wireless receiver 220. The pre-filtering parameters computing module 222 is therefore adapted to select the couple of quantized channel matrix $\Delta_q$ and pre-filtering parameters which provides the best result of the utility function from amongst all couples of quantized channel matrix $\Delta_q$ and associated pre-filtering parameters that could be obtained from the set of predefined quantized channel matrices $\Delta_q$ provided by the quantized channel providing module 225. Details of the behaviour of the pre-filtering parameters computing module 222 are provided hereafter with regard to Fig. 4.

The pre-filtering parameters computing module 222 is adapted to configure the pre-filtering module 223 and the decoding module 224 in order to enable the wireless receiver 220 to decode constellation symbols z, transmitted by the wireless transmitter 110 via the linear fading transmission channel 130, according to the selected appropriate quantized channel matrix $\Delta_q$ and the associated pre-filtering parameters. The pre-filtering parameters computing module 222 is adapted to configure the decoding module 224 in order to allow obtaining estimates z of the constellation symbols z according to an applicable channel model. Details of how the pre-filtering parameters computing module 222 configures the pre-filtering module 223 and the decoding module 224 are provided hereafter with regard to Fig. 4. Details of how the decoding module 224 determines the estimates z of the constellation symbols z transmitted by the wireless transmitter 110 via the linear fading transmission channel 130 are provided hereafter with regard to Fig. 5. The decoding module 224 may rely on ZF *(Zero-Forcing)* or SIC (*Successive Interference Cancellation*) decoding.

**Fig. 3** schematically represents a hardware platform enabling implementation of the wireless receiver 220.

According to the shown hardware platform, the wireless receiver 220 comprises the following components interconnected by a communications bus 310: a processor, microprocessor, microcontroller or CPU (*Central Professing Unit*) 300; a RAM *(Random-Access Memory)* 301; a ROM (*Read-Only Memory*) 302; an SD (*Secure Digital*) card reader 303, or any other device adapted to read information stored on storage means, such as an HDD (*Hard Disk Drive*); and, a communication interface 304 that allows the wireless receiver 220 to receive symbols via the linear fading transmission channel 130.

CPU 300 is capable of executing instructions loaded into RAM 301 from ROM 302 or from an external memory, such as an SD card. After the wireless receiver 220 has been powered on, CPU 300 is capable of reading instructions from RAM 301 and executing these instructions. The instructions form one computer program that causes CPU 300 to perform some or all of the steps of the algorithms described hereafter.

Any and all steps of the algorithms described hereafter, as well as the architecture shown in Fig. 2, may be implemented in software by execution of a set of instructions or program by a programmable computing machine, such as a PC (*Personal Computer*), a DSP (*Digital Signal Professor*) or a microcontroller; or else implemented in hardware by a machine or a dedicated component, such as an FPGA (*Field-Programmable Gate Array*) or an ASIC (*Application-Specific Integrated Circuit).*

**Fig. 4** schematically represents an algorithm for configuring the wireless receiver 220, *i.e.* for selecting the appropriate couple of quantized channel matrix $\Delta_q$ and pre-filtering parameters upon detecting a change of the observed channel represented by the matrix $\Delta$.

In the scope of the architecture shown in Fig. 2, the algorithm of Fig. 4 is performed by the pre-filtering parameters computing module 222. The algorithm of Fig. 4 may thus be performed by the wireless receiver 220, or may be performed by a configuring device integrated in the wireless receiver 220, or directly or indirectly connected to the wireless receiver 220, and adapted to configure the wireless receiver 220 for enabling the wireless receiver 220 to decode symbols received from the transmitter device 110 via the linear fading transmission channel 130.

In a step S401, upon detecting a change of the observed channel represented by the matrix $\Delta$, the wireless receiver 220 obtains a list $\mathcal{L}$ of candidate quantized channel matrices $\Delta_q$. Observing the linear fading transmission channel 130 can be performed by using pilot signals, as known by the ordinary one skilled in the art.

Considering the architecture of the wireless receiver 220 shown in Fig. 2, the list $\mathcal{L}$ of candidate quantized channel matrices $\Delta_q$ is provided by the quantized channel providing module 225. The candidate quantized channel matrices $\Delta_q$ are predefined. The algorithm of Fig. 4 aims at selecting the appropriate quantized channel matrix $\Delta_q$ from amongst the candidates in the list $\mathcal{L}$ for further configuring decoding operations of the wireless receiver 220.

Each candidate quantized channel matrix $\Delta_q$ of the list $\mathcal{L}$ satisfies the following relationship:

$$\exists T \in GL_n(\mathbb{Z}[i]), \qquad \Delta_q \Phi = \Phi T$$

with the following equivalent channel model:

$$y = \Delta \Phi z + \eta$$

wherein $GL_n(\mathbb{Z}[i])$ represents the general linear group of degree $n$ over $\mathbb{Z}[i]$ (*i.e.* the set of $n$ x $n$ invertible matrices having coefficients in $\mathbb{Z}[i]$), each matrix **T** is unimodular, $\eta$ is an additive complex white Gaussian noise vector with unitary variance components, $y$ is a vector of size $n$ of symbols received by the wireless receiver 220 via the linear fading transmission channel 130, z is a vector of size n of modulation symbols such that $z \in \mathbb{Z}[i]^n$ and such that $E[zz^\dagger]= \rho I$, wherein $I$ is an identity matrix of size $n$, $\rho$ is a scalar, $z^\dagger$ is the transpose of the vector z, and $E[.]$ represents the mathematical expectation.

The matrix $\Delta$ representing the observed channel can be of different structure according to the communication system in use and thus the candidate quantized channel matrices $\Delta_q$ match one of the following cases:

- diagonal complex matrices, when the communication system relies on orthogonal resources usage, *e.g.* frequency resources such as in OFDM (*Orthogonal Frequency-Division Multiplexing*), or time resources such as in TDMA (*Time Division Multiple Access),* or space resources such as when the linear fading transmission channel 130 is made orthogonal by eigen-beamforming, which can be represented as follows:

$$\forall \Delta_q \in \mathcal{L}, \forall i \neq j, \qquad \Delta_q(i,j) = 0$$

- complex matrices, such as according to a general MIMO channel model, which can be represented as follows:

$$\forall \Delta_q \in \mathcal{L}, \forall i \neq j, \qquad \Delta_q(i,j) \in \mathbb{C}$$

and
- space-time channel matrices that are block diagonal repetitions of MIMO channel models, which can be represented as follows:

$$\forall \Delta_q \in \mathcal{L}, \forall 0 \leq i \leq s - 1, \forall j \neq i, 0 \leq j \leq s - 1, \forall 1 \leq u \leq N_r, \forall 1 \leq v \leq N_t,$$
$$\Delta_q(i.N_r + u, j.N_t + v) = 0$$

wherein $N_r$ represents a quantity of receiving antennas used by the wireless receiver 220 for receiving the symbols $y$ via the linear fading transmission channel 130, $N_t$ represents a quantity of transmitting antennas used by the wireless transmitter 110 for transmitting the symbols z via the linear fading transmission channel 130, and s represents a quantity of blocks representing space-time code time dimension.

According to a first embodiment for building the list $\mathcal{L}$ of candidate quantized channel matrices $\Delta_q$, the list $L$

of candidate quantized channel matrices $\Delta_q$ is heuristically built by generating a set of unimodular matrices T' such that:

$$\mathrm{T}'\mathbb{Z}[i]^n = \mathbb{Z}[i]^n$$

then by determining resulting quantized channel matrices $\Delta_q$' such that:

$$\Delta_q{}' = \Phi \mathrm{T}' \Phi^{\dagger}$$

and then by retaining the quantized channel matrices $\Delta_q$, from amongst said resulting quantized channel matrices $\Delta_q$', which match the expected structure of the quantized channel matrices $\Delta_q$ in view of the communication system in use (*i.e.* diagonal complex matrices or complex matrices or space-time channel matrices, as defined above). The matrices T' that led to the retained quantized channel matrices $\Delta_q$ thus form the matrices T used afterwards.

According to a second embodiment for building the list $\mathcal{L}$ of candidate quantized channel matrices $\Delta_q$, the matrix $\Phi$ is a pre-coding matrix corresponding to a cyclotomic rotation (*i.e.* the coefficients of the pre-coding matrix $\Phi$ being determined by a cyclotomic field) performing a linear rotation of the constellation symbols z and the candidate quantized channel matrices $\Delta_q$ are diagonal complex matrices and the list *L* of candidate quantized channel matrices $\Delta_q$ is algebraically built. Considering that the matrix $\Phi$ is a cyclotomic rotation, the candidate quantized channel matrices $\Delta_q$ are built from the cyclotomic units of the corresponding cyclotomic field, *i.e.* the elements constituting the group of units of said cyclotomic field. Said cyclotomic units can be determined from the fundamental units $u_i$ of said cyclotomic field represented as vectors of size *n* and thus the candidate quantized channel matrices $\Delta_q$ can be determined using diagonal matrices $B_i$, wherein *i* is an index from 1 to *n'*, *n'* being thus the quantity of the fundamental units $u_i$ of the cyclotomic field, such that:

$$\mathrm{diag}\, B_i = \sqrt{n}\Phi u_i$$

wherein, for a matrix A, diag A represents the vector of the diagonal coefficients of the matrix A. The candidate quantized channel matrices $\Delta_q$ can then be determined as follows:

$$\forall \Delta_q \in \mathcal{L}, \exists k \in \mathbb{Z}[i]^{n'}, \qquad \Delta_q = \prod_i B_i^{k_i}$$

wherein $k_i$ represents the *i*-th component of the vector *k*. As a result, all the quantized channel matrices $\Delta_q$ built in this way have a determinant equal to "1".

Thus, the list *L* of candidate quantized channel matrices $\Delta_q$ is built from a random set constituted by the vectors *k*.

According to a third embodiment for building the list $\mathcal{L}$ of candidate quantized channel matrices $\Delta_q$, which is a particular embodiment of the second embodiment for building the list *L* of candidate quantized channel matrices $\Delta_q$, considering an *n* x *n'* matrix G such that:

$$G = \log(|[\mathrm{diag}\, B_1, \dots, \mathrm{diag}\, B_{n'}]|)$$

the list *L* of candidate quantized channel matrices $\Delta_q$ can be obtained by a list of lattice points selected at random, the lattice having the matrix *G* as generator matrix, or by using a spherical construction gathering lattice points around the origin of the lattice within a radius *R* as follows:

$$\forall \Delta_q \in \mathcal{L}, \exists k \in \mathbb{Z}[i]^{n'}, \qquad \|Gk\|^2 \leq R^2 \text{ and } \Delta_q = \prod_i B_i^{k_i}$$

wherein $k_i$ represents the $i$-th component of the vector $k$, and wherein the radius $R$ can be adjusted to obtain a desired quantity of points in the lattice.

According to a fourth embodiment for building the list $\mathcal{L}$ of candidate quantized channel matrices $\Delta_q$, considering the fact that lattices are linear (*i.e.* for two lattice points $Gk_1$ and $Gk_2$, $G(k_1 + k_2)$ is also a lattice point), improvement in building the list $L$ of candidate quantized channel matrices $\Delta_q$ can be achieved. The wireless receiver 220 first builds a list $L''$ of quantized channel matrices $\Delta''_q$ by spherical construction gathering lattice points around the origin of the lattice, as explained with regard to the third embodiment for building the list $\mathcal{L}$ of candidate quantized channel matrices $\Delta_q$. The wireless receiver 220 then converts the observed channel represented by the matrix $\Delta$ into a point $\delta$ lying in the lattice, such that:

$$\delta = \frac{1}{\det(\Delta)} \log|\mathrm{diag}(\Delta)|$$

wherein, for a matrix A, det(A) represents the determinant of the matrix A. Then, the wireless receiver 220 finds a *vector k* such that the lattice point $Gk$ is close to the point $\delta$, wherein $G$ is the matrix as defined above. In order to find the lattice point $Gk$, a zero-forcing decoder may be used, which leads to:

$$\hat{k} = \lfloor G^{\#}\delta \rceil$$

wherein $G^{\#}$ is the pseudo-inverse matrix of the matrix $G$ and [.] represents an operation of rounding to the closest integer. The wireless receiver 220 then shifts the list $L''$ of quantized channel matrices $\Delta''_q$ around another point of the lattice than the origin of the lattice. The wireless receiver 220 shifts around the point $k$ the vectors $k''$ associated with the list $L''$ of quantized channel matrices $\Delta''_q$ *that* were centred around the origin of the lattice. Indeed, shifting the equivalent lattice points $k''$ around the lattice point corresponding to the vector $\hat{k}$ and then applying the transformation by the matrix $G$ is equivalent to shifting each lattice point represented by the vector $Gk''$ around the lattice point represented by the vector $G\hat{k}$ (since $G(\hat{k} + k'') = G\hat{k} + Gk'')$, and thus:

$$\forall \Delta_q \in \mathcal{L}, \forall \Delta''_q \in \mathcal{L}'', \exists k \in \mathbb{Z}[i]^{n'}, \log|\mathrm{diag}(\Delta''_q)| = Gk \text{ and } \Delta_q = \prod_i B_i^{k_i + \hat{k}_i}$$

According to a fifth embodiment for building the list $\mathcal{L}$ of candidate quantized channel matrices $\Delta_q$, improvement in building the list $L$ of candidate quantized channel matrices $\Delta_q$ can be achieved. The wireless receiver 220 first builds the list $L''$ of the quantized channel matrices $\Delta''_q$ by spherical construction gathering lattice points around the origin of the lattice, as explained with regard to the fourth embodiment for building the list $\mathcal{L}$ of candidate quantized channel matrices $\Delta_q$. The wireless receiver 220 then converts the observed channel represented by the matrix $\Delta$ into the point $\delta$ lying in the lattice and finds a vector $\hat{k}$ such that the point $Gk$ of the lattice is close to the point $\delta$, as explained in the fourth embodiment for building the list $L$ of candidate quantized channel matrices $\Delta_q$. Then, the wireless receiver 220 computes a list of matrices $\hat{\Delta}_q$ such that:

$$\hat{\Delta}_q = \prod_i B_i^{\hat{k}_i}$$

and thus:

$$\forall \Delta_q \in \mathcal{L}, \exists \Delta''_q \in \mathcal{L}'', \quad \Delta_q = \Delta''_q \widehat{\Delta}_q$$

According to a particular embodiment, since the candidate quantized channel matrices $\Delta_q$ are used in conjunction with respective pre-filtering parameters, the respective phases of the coefficients of the candidate quantized channel matrices $\Delta_q$ and the respective determinants $\det(\Delta_q)$ of the candidate quantized channel matrices $\Delta_q$ have no impact on the quality of the list $L$ in view of the decoding performance of the wireless receiver 220 under a complex additive white Gaussian noise. Thus, when the wireless receiver 220 detects that, for two candidate quantized channel matrices $\Delta_{q1}$ and $\Delta_{q2}$ the following relationship is met:

$$\Delta_{q1} = \alpha U \Delta_{q2}$$

wherein $\alpha$ is a scalar and U is a unitary matrix,
then the wireless receiver 220 withdraws either $\Delta_{q1}$ or $\Delta_{q2}$ from the list $L$ of candidate quantized channel matrices $\Delta_q$.
In a following step S402, the wireless receiver 220 selects one quantized channel matrix $\Delta_q$ from amongst the candidate quantized channel matrices $\Delta_q$ belonging to the list $\mathcal{L}$ .
In a following step S403, the wireless receiver 220 obtains pre-filtering parameters defining a pre-filter associated with the selected quantized channel matrix $\Delta_q$.
The pre-filtering parameters are obtained so as to optimize, for the quantized channel matrix $\Delta_q$ selected in the step S402, the result of a utility function that is used by the wireless receiver 220 to further select the appropriate quantized channel matrix $\Delta_q$ for decoding received pre-coded symbols transmitted by the wireless transmitter 110 via the linear fading transmission channel 130. The utility function is representative of decoding performance (loss rate and/or processing latency and/or processing resources cost and/or data rate) of the wireless receiver 220 in view of a considered quantized channel matrix $\Delta_q$ and further in view of the channel matrix $\Delta$. The pre-filtering parameters depend on the quantized channel matrix $\Delta_q$ selected in the step S402 and on the observed channel, *i.e.* on the channel matrix $\Delta$.
Since the pre-filtering parameters F are obtained so as to optimize, for the quantized channel matrix $\Delta_q$ selected in the step S402, the result of said utility function, different embodiments of the utility function $g$ have to be considered first. In other words, the wireless receiver 220 optimizes the utility function $g$ according to the pre-filtering parameters $F$ considering fixed the quantized channel matrix $\Delta_q$ (that has been selected in the step S402) and the channel matrix $\Delta$.
According to a first embodiment of the utility function $g$, the utility function $g$ depends on the covariance matrix $\Sigma(F)$ and is such that:

$$g\big(\Sigma(F)\big) = \max\big|\log\big(\big|\mathrm{diag}\left(\det(\Delta)^2\, \Phi\Sigma(F)\Phi^\dagger\right)\big|\big)\big|$$

wherein the utility function $g$ has to be minimized and wherein:

$$\Sigma(F) = E[\eta'\eta'^\dagger] = \Phi^\dagger\left[\rho\big(F\Delta - \Delta_q\big)\big(F\Delta - \Delta_q\big)^\dagger + FF^\dagger\right]\Phi$$

wherein $\eta'$ is an equivalent noise such that:

$$\eta' = \Phi^\dagger\big(F\Delta - \Delta_q\big)\Phi z + \Phi^\dagger F\eta$$

For the sake of understanding, it is reminded here that $\rho$ is defined as follows:

$$E[zz^\dagger] = \rho I$$

and that

$$E[\eta\eta^\dagger] = I$$

Therefore the pre-filtering parameters $F$ are determined so as to minimize the utility function $g$ for the quantized channel matrix $\Delta_q$ selected in the step S402.

According to a second embodiment of the utility function $g$, the utility function $g$ is to be minimized and is defined as the probability that the equivalent noise $\eta'$ is outside a complex hypersquare $S = [-1/2, 1/2]^n + j[-1/2, 1/2]^n$, wherein $j$ represents the imaginary unit, and is such that:

$$g\big(\Sigma(F)\big) = \oint_{\eta' \notin S} \frac{1}{\pi^n \det\big(\Sigma(F)\big)} \exp\left(-1/2 \, \eta'^\dagger \Sigma(F)^{-1}\eta'\right) d\eta'$$

wherein n represents the number of symbols of each vector.

Such a utility function $g$ is preferably used when the wireless receiver 220 uses zero-forcing decoding.

According to a third embodiment of the utility function $g$, the utility function $g$ depends on the covariance matrix $\Sigma(F)$, the utility function $g$ is to be minimized and is such that, considering that the lattice performance is upper bounded:

$$g\big(\Sigma(F)\big) = trace\left(\Sigma(F)\right) = trace\left(\rho\big(F\Delta - \Delta_q\big)\big(F\Delta - \Delta_q\big)^\dagger + FF^\dagger\right)$$

Such a utility function $g$ is preferably used when the wireless receiver 220 uses zero-forcing decoding.

According to a fourth embodiment of the utility function $g$, the utility function $g$ depends on a Cholesky decomposition of the inverse covariance matrix $\Sigma(F)^{-1}$ and is such that:

$$g\big(\Sigma(F)\big) = 1 - \prod_i \left(1 - Q\sqrt{\rho R_{i,i}^2}\right) \simeq \sum_i \frac{1}{2} e^{-\rho R_{i,i}^2/2} \simeq \frac{1}{2} e^{-\min\big(\rho R_{i,i}^2/2\big)}$$

wherein R is an upper triangular matrix such that:

$$\Sigma(F)^{-1} = R^\dagger R$$

and wherein $Q$ represents the Marcum's error function.

Such a utility function $g$ is preferably used when the wireless receiver 220 relies on SIC decoding.

According to a fifth embodiment of the utility function $g$ which is equivalent to the fourth embodiment of the utility function $g$, the utility function $g$ depends on a Cholesky decomposition of the covariance matrix $\Sigma(F)$ and is such that:

$$g\big(\Sigma(F)\big) = \max\left(M_{i,i}\right)$$

wherein M is a matrix such that:

$$\Sigma(F) = M^\dagger M$$

Such a utility function $g$ is preferably used when the wireless receiver 220 uses SIC decoding.

According to the various embodiments of the utility function $g$ provided above, the definition of the pre-filtering parameters *F* can be considered.

According to a first embodiment of the pre-filtering parameters *F*, the pre-filtering parameters *F* are defined so as to perform zero-forcing $\Delta^{-1}$ on the linear fading transmission channel 130 and then force the linear fading transmission channel 130 to be represented by the quantized channel matrix $\Delta_q$ selected in the step S402, which leads to:

$$F = \Delta_q \Delta^{-1}$$

and moreover, for the definition of the utility function *g*:

$$\Sigma(F) = \Phi^\dagger \Delta_q \Delta^{-1} (\Delta^{-1})^\dagger \Delta_q{}^\dagger \Phi$$

According to a second embodiment of the pre-filtering parameters *F*, the pre-filtering parameters *F* are defined so as to perform MMSE pre-filtering and a filtering by the quantized channel matrix $\Delta_q$ selected in the step S402, which leads to:

$$F = \rho \Delta_q \Delta^\dagger (\rho \Delta \Delta^\dagger + I)^{-1}$$

and moreover, for the definition of the utility function *g*:

$$\Sigma(F) = \rho \Phi^\dagger \Delta_q (\rho \Delta \Delta^\dagger + I)^{-1} \Delta_q{}^\dagger \Phi$$

In a variant, the pre-filtering parameters *F* may be numerically defined, on the basis of one of the following further embodiments of the utility function *g*.

According to a sixth embodiment of the utility function *g*, the utility function *g* is to be minimized and is defined as the probability that the equivalent noise $\eta'$ is outside the complex hypersquare $S = [-^1/_2, \ ^1/_2]^n + \jmath[-^1/_2, ^1/_2]^n$, wherein *j* represents the imaginary unit, and is such that:

$$g(F) = E_z \left[ \oint_{\eta' \notin S - m} \frac{1}{\pi^n \det(\Phi^\dagger F F^\dagger \Phi)} \exp(-\eta'^\dagger (\Phi^\dagger F F^\dagger \Phi)^{-1} \eta') \, d\eta' \right]$$

wherein m represents the mean of the equivalent noise $\eta'$ and is expressed as follows:

$$m = \Phi^\dagger (F\Delta - \Delta_q) \Phi z$$

and wherein $E_z[.]$ represents the mathematical expectation performed over all vectors representing the symbols z that could possibly be transmitted by the wireless transmitter 110 via the linear fading transmission channel 130. Such a utility function *g* is preferably used when the wireless receiver 220 uses zero-forcing decoding.

In a following step S404, the wireless receiver 220 determines the result of the utility function (*i.e.* the function *g* in the various embodiments presented above) for the quantized channel matrix $\Delta_q$ selected in the step S402 and for the pre-filtering parameters obtained in the step S403 for the quantized channel matrix $\Delta_q$ selected in the step S402 and for the observed channel, *i.e.* the matrix $\Delta$.

In a following step S405, the wireless receiver 220 checks whether there is at least one other candidate quantized channel matrix $\Delta_q$ to be considered. When there is at least one other candidate quantized channel matrix $\Delta_q$ to be considered, the step S402 is repeated by selecting one among said at least one other candidate quantized channel matrix $\Delta_q$ to be considered; otherwise, a step S406 is performed.

In the step S406, the wireless receiver 220 selects the appropriate candidate quantized channel matrix $\Delta_q$ to

be applied for decoding symbols further received by the wireless receiver 220 via the linear fading transmission channel 130, on the basis of the results of the utility function as determined during the various executions of the step S404. The appropriate candidate quantized channel matrix $\Delta_q$ is the candidate quantized channel matrix $\Delta_q$ that optimizes, jointly with the associated pre-filtering parameters, the utility function.

In a following step S407, the wireless receiver 220 is then configured to apply the selected appropriate quantized channel matrix $\Delta_q$ and associated pre-filtering parameters, and is thus configured in such a way that the decoding performance is improved. According to the architecture shown in Fig. 2, the pre-filtering parameters computing module 222 configures the pre-filtering module 223 and the decoding module 224 in order to enable the wireless receiver 220 to obtain estimates $z$ of constellation symbols $z$ transmitted by the wireless transmitter 110 via the linear fading transmission channel 130 according to the selected appropriate quantized channel matrix $\Delta_q$ and the associated pre-filtering parameters.

In view of what precedes, the pre-filtering parameters computing module 222 provides the matrix $F$ (corresponding to the selected appropriate quantized channel matrix $\Delta_q$) to the pre-filtering module 223 and the unimodular matrix $T$ (corresponding to the selected appropriate quantized channel matrix $\Delta_q$) to the decoding module 224, in order to match the following channel model:

$$\Phi^\dagger F y = Tz + \eta'$$

wherein the matrix $\Phi$ is *a priori* known by the pre-filtering module 223. The matrix $\Phi$ being *a priori* known by the pre-filtering parameters computing module 222, the pre-filtering parameters computing module 222 may also provide the matrix $\Phi$, or the matrix $\Phi^\dagger$, to the pre-filtering module 223.

In a particular embodiment, the wireless receiver 220 applies a noise whitening filter, represented by a matrix $W$ that is an upper triangular matrix obtained by Cholesky decomposition and defined such that:

$$\Sigma(F)^{-1} = W^\dagger W$$

In other words, the noise whitening filter matrix $W$ is equivalent to the aforementioned matrix $R$.

In view of what precedes, the pre-filtering parameters computing module 222 provides the matrix $F$ (corresponding to the selected appropriate quantized channel matrix $\Delta_q$) and the matrix $W$ to the pre-filtering module 223. The pre-filtering parameters computing module 222 provides the unimodular matrix $T$ (corresponding to the selected appropriate quantized channel matrix $\Delta_q$) and the matrix $W$ to the decoding module 224, in order to match the following channel model:

$$W\Phi^\dagger F y = WTz + \eta''$$

wherein $\eta''$ is a noise vector with identity covariance matrix.

**Fig. 5** schematically represents an algorithm for processing symbols $y$ received by the wireless receiver 220 via the linear fading transmission channel 130. It is considered, in the scope of the algorithm of Fig. 5, that the wireless receiver 220 has been beforehand configured to use the appropriate candidate quantized channel matrix $\Delta_q$ and the associated pre-filtering parameters, as described in the scope of the algorithm of Fig. 4.

In a step S501, the wireless receiver 220 receives the symbols $y$ via the linear fading transmission channel 130. Before transmission via the linear fading transmission channel 130, the wireless transmitter 110 may have performed a pre-coding operation, as represented by the matrix $\Phi$ that is *a priori* known by the wireless receiver 220 (when no pre-coding operation is performed, the matrix equals identity).

In a following step S502, the wireless receiver 220 applies the pre-filtering parameters, represented by the aforementioned matrix $F$, associated with the appropriate quantized channel matrix $\Delta_q$ on the received symbols $y$. The wireless receiver 220 further applies the matrix $\Phi^\dagger$ onto the received symbols $y$ after having applied the pre-filtering parameters, in order to compensate the pre-coding operations performed by the wireless transmitter 110. Applying the matrix $\Phi^\dagger$ is however not necessary when no pre-coding operations are performed by the wireless transmitter 110, since the matrix $\Phi$ equals identity in this case.

In an optional following step S503, the wireless receiver 220 applies a noise whitening filter, represented by the aforementioned matrix $W$.

In a following step S504, the wireless receiver 220 decodes the symbols resulting from the pre-filtering and optionally the noise whitening filtering.

It is reminded that, when no noise whitening filter is applied, the channel model can be expressed as follows:

$$\Phi^{\dagger} F y = T z + \eta'$$

The wireless receiver 220 therefore makes a decision on symbols $z' = Tz$ using ZF decoding and then convert the symbols $z'$ into the estimates $z$ of the symbols $z$ using $z = T^{-1}z$.

It is reminded that, when the noise whitening filter is applied, the channel model can be expressed as follows:

$$W \Phi^{\dagger} F y = W T z + \eta''$$

The wireless receiver 220 therefore considers that the matrix $W$ represents an equivalent channel and makes a decision on the symbols $z' = Tz$ using SIC decoding, since the matrix $W$ provides the triangular character necessary for performing SIC decoding, and then convert the symbols $z'$ into the estimates $\hat{z}$ of the symbols $z$ using $\hat{z} = T^{-1}z$.

**Claims**

1. A method for configuring a receiver in a communication system, the receiver receiving symbol vectors $y$ of size $n$ resulting from a transmission of symbol vectors $z$ of size n by a transmitter via a linear fading transmission channel, the method being performed by a configuring device adapted to configure the receiver, the configuring device obtaining a channel matrix $\Delta$ representative of observations of the linear fading transmission channel, **characterised in that** the method comprises:

   - obtaining a list $L$ of candidate quantized channel matrices $\Delta_q$ satisfying the following relationship:

   $$\Delta_q \Phi = \Phi T$$

   wherein $\Phi$ is a pre-coding matrix when the transmitter applies pre-coding operations before transmitting the symbols via the linear fading transmission channel and equals identity otherwise, and wherein each matrix T is unimodular;
   - determining, for each candidate quantized channel matrix $\Delta_q$, pre-filtering parameters by optimizing a utility function $g$ according to the pre-filtering parameters in view of said candidate quantized channel matrix $\Delta_q$ and of the channel matrix $\Delta$, the utility function $g$ being representative of the receiver performance in view of a selected candidate quantized channel matrix $\Delta_q$ and of the channel matrix $\Delta$;
   - selecting one appropriate quantized channel matrix $\Delta_q$ of said list $L$ and the respective pre-filtering parameters according to results of the utility function $g$ determined for each candidate quantized channel matrix $\Delta_q$ and the respectively determined pre-filtering parameters; and
   - configuring the receiver such that the receiver applies, onto the received symbol vectors $y$, a pre-filtering based on the selected pre-filtering parameters, and such that the receiver makes a decision on symbols $z' = Tz$ to enable further converting the symbols $z'$ into estimates $\hat{z}$ of the symbols $z$.

2. The method according to claim 1, **characterised in that** the configuring device heuristically builds the list $L$ of candidate quantized channel matrices $\Delta_q$ by:

   - generating a set of unimodular matrices T';
   - determining resulting quantized channel matrices $\Delta_q'$ such that:

   $$\Delta_q' = \Phi T' \Phi^{\dagger}$$

- retaining as candidate quantized channel matrices $\Delta_q$ the resulting quantized channel matrices $\Delta_q'$ that match an expected structure of the quantized channel matrices $\Delta_q$ in view of the communication system, said structure being either diagonal complex matrices or complex matrices or space-time channel matrices, and retaining as matrices T the matrices T' that led to the retained candidate quantized channel matrices $\Delta_q$.

**3.** The method according to claim 1, **characterised in that** the matrix $\Phi$ is a pre-coding matrix corresponding to a cyclotomic rotation, the candidate quantized channel matrices $\Delta_q$ are diagonal complex matrices and the configuring device algebraically builds list L of candidate quantized channel matrices $\Delta_q$ from the fundamental units $u_i$ of the cyclotomic field represented as vectors of size $n$ as follows:

$$\mathrm{diag}\, B_i = \sqrt{n}\Phi u_i$$

$$\Delta_q = \prod_i B_i^{k_i}$$

wherein $B_i$ are diagonal matrices, $i$ being an index from 1 to $n'$, $n'$ being the quantity of the fundamental units of the cyclotomic field, and wherein $k$ represents a vector of size $n'$, $k_i$ representing the $i$-th component of the vector $k$.

**4.** The method according to claim 3, **characterised in that**, considering a lattice having an $n$ x $n'$ generator matrix $G$ such that:

$$G = \log(|[\mathrm{diag}\, B_1, \dots, \mathrm{diag}\, B_{n'}]|)$$

the configuring device builds the list $\mathcal{L}$ L of candidate quantized channel matrices $\Delta_q$ by a list of lattice points selected at random, or by using a spherical construction gathering lattice points around the origin of the lattice within a radius R as follows:

$$\|Gk\|^2 \leq R^2$$

**5.** The method according to claim 1, **characterised in that** the matrix $\Phi$ is a pre-coding matrix corresponding to a cyclotomic rotation, the candidate quantized channel matrices $\Delta_q$ are diagonal complex matrices and the configuring device algebraically builds a list $L''$ of quantized channel matrices $\Delta''_q$ from the fundamental units $u_i$ of the cyclotomic field represented as vectors of size $n$ as follows:

$$\mathrm{diag}\, B_i = \sqrt{n}\Phi u_i$$

$$\Delta''_q = \prod_i B_i^{k_i}$$

wherein $B_i$ are diagonal matrices, $i$ being an index from 1 to $n'$, $n'$ being the quantity of the fundamental units of the cyclotomic field, and wherein $k$ represents a vector of size $n'$, $k_i$ representing the $i$-th component of the vector $k$, and, considering a lattice having an $n$ x $n'$ generator matrix $G$ such that:

$$G = \log(|[\text{diag } B_1, \dots, \text{diag } B_{n'}]|)$$

the configuring device builds the list $\mathcal{L}''$ of quantized channel matrices $\Delta''_q$ by using a spherical construction gathering lattice points around the origin of the lattice within a radius $R$ as follows:

$$\|Gk\|^2 \leq R^2$$

and the configuring device converts the channel matrix $\Delta$ into a point $\delta$ lying in the lattice, such that:

$$\delta = \frac{1}{\det(\Delta)}\log|\text{diag}(\Delta)|$$

and the configuring device finds a vector $k$ such that $Gk$ is a point of the lattice which is close to the point $\delta$, and shifts, around the lattice point defined by the vector $k$, vectors $k''$ associated with the list $\mathcal{L}''$ of quantized channel matrices $\Delta''_q$ that were centred around the origin of the lattice,

and the configuring device builds the list $\mathcal{L}$ of candidate quantized channel matrices $\Delta_q$ as follows:

$$\log|\text{diag}(\Delta''_q)| = Gk \text{ and } \Delta_q = \prod_i B_i^{k_i + \widehat{k}_i}$$

wherein $k$ represents a vector of size $n'$, $k_i$ representing the $i$-th component of the vector $k$ and $\widehat{k}_i$ representing the $i$-th component of the vector $k$.

6. The method according to claim 1, **characterised in that** the matrix $\Phi$ is a pre-coding matrix corresponding to a cyclotomic rotation, the candidate quantized channel matrices $\Delta_q$ are diagonal complex matrices and the configuring device algebraically builds a list $L''$ of quantized channel matrices $\Delta''_q$ from the fundamental units $u_i$ of the cyclotomic field represented as vectors of size $n$ as follows:

$$\text{diag } B_i = \sqrt{n}\Phi u_i$$

$$\Delta''_q = \prod_i B_i^{k_i}$$

wherein $B_i$ are diagonal matrices, $i$ being an index from 1 to $n'$, $n'$ being the quantity of the fundamental units of the cyclotomic field, and wherein $k$ represents a vector of size $n'$, $k_i$ representing the $i$-th component of the vector $k$, and, considering a lattice having an n x $n'$ generator matrix $G$ such that:

$$G = \log(|[\text{diag } B_1, \dots, \text{diag } B_{n'}]|)$$

the configuring device builds the list $L''$ of quantized channel matrices $\Delta''_q$ by using a spherical construction gathering lattice points around the origin of the lattice within a radius R as follows:

$$\|Gk\|^2 \leq R^2$$

and the configuring device converts the channel matrix $\Delta$ into a point $\delta$ lying in the lattice, such that:

$$\delta = \frac{1}{\det(\Delta)} \log|\mathrm{diag}(\Delta)|$$

and the configuring device finds a vector $k$ such that $Gk$ is a point of the lattice which is close to the point $\delta$, and shifts, around the lattice point defined by the vector $k$, vectors $k''$ associated with the list $L''$ of quantized channel matrices $\Delta''_q$ that were centred around the origin of the lattice,
and the configuring device builds a list of quantized channel matrices $\hat{\Delta}_q$ as follows:

$$\hat{\Delta}_q = \prod_i B_i^{\hat{k}_i}$$

wherein $\hat{k}_i$ represents the $i$-th component of the vector $\hat{k}$,

and the configuring device builds the list $\mathcal{L}$ of candidate quantized channel matrices $\Delta_q$ as follows:

$$\Delta_q = \Delta''_q \, \hat{\Delta}_q$$

7. The method according to any one of claims 1 to 6, **characterised in that**, the selected pre-filtering parameters being represented by a matrix $F$, the receiver implementing a successive interference cancellation decoder, the configuring device determines a noise whitening filter, represented by a matrix $W$ that is an upper triangular matrix obtained by Cholesky decomposition and defined such that:

$$\Sigma(F)^{-1} = W^\dagger W$$

and **in that** the configuring device configures the receiver such that the receiver applies the noise whitening filter before making the decision on the symbols $z'$.

8. The method according to any one of claims 1 to 7, **characterised in that**, the selected pre-filtering parameters being represented by a matrix $F$, the utility function $g$ depends on the covariance matrix $\Sigma(F)$ and is such that:

$$g\big(\Sigma(F)\big) = \max\big|\log\big(\big|\mathrm{diag}\left(\det(\Delta)^2\,\Phi\Sigma(F)\Phi^\dagger\right)\big|\big)\big|$$

and **in that** the utility function $g$ has to be minimized.

9. The method according to any one of claims 1 to 6, **characterised in that**, the selected pre-filtering parameters being represented by a matrix $F$, the receiver implementing a zero-forcing decoder, the utility function $g$ depends on the covariance matrix $\Sigma(F)$ and is defined as the probability that an equivalent noise $\eta'$ is outside a complex hypersquare $S = [^{-1}/_2, \, ^{1}/_2]^n + J[^{-1}/_2, \, ^{1}/_2]^n$, wherein $j$ represents the imaginary unit, such that:

$$\eta' = \Phi^\dagger\big(F\Delta - \Delta_q\big)\Phi z + \Phi^\dagger F\eta$$

$$g\big(\Sigma(F)\big) = \oint_{\eta' \notin S} \frac{1}{\pi^n \det\big(\Sigma(F)\big)} \exp\big(-1/2\, \eta'^\dagger \Sigma(F)^{-1} \eta'\big)\, d\eta'$$

wherein $\eta$ is an additive complex white Gaussian noise vector with unitary variance components encountered by the received symbol vectors $y$ via the linear fading transmission channel,
and **in that** the utility function $g$ has to be minimized.

10. The method according to any one of claims 1 to 6, **characterised in that**, the selected pre-filtering parameters being represented by a matrix $F$, the receiver implementing a zero-forcing decoder, the utility function $g$ depends on the covariance matrix $\Sigma(F)$ and is such that:

$$g\big(\Sigma(F)\big) = trace\big(\Sigma(F)\big) = trace\left(\rho\big(F\Delta - \Delta_q\big)\big(F\Delta - \Delta_q\big)^\dagger + FF^\dagger\right)$$

wherein $\rho$ is a scalar such that $E[zz^\dagger] = \rho I$, $I$ being an identity matrix of size n, and $E[.]$ representing the mathematical expectation,
and **in that** the utility function $g$ has to be minimized.

11. The method according to any one of claims 1 to 7, **characterised in that**, the selected pre-filtering parameters being represented by a matrix $F$, the receiver implementing a successive interference cancellation decoder, the utility function $g$ depends on a Cholesky decomposition of the inverse covariance matrix $\Sigma(F)^{-1}$ and is such that:

$$g\big(\Sigma(F)\big) = 1 - \prod_i\left(1 - Q\sqrt{\rho R_{i,i}^2}\right) \simeq \sum_i \frac{1}{2} e^{-\rho R_{i,i}^2/2} \simeq \frac{1}{2} e^{-\min\big(\rho R_{i,i}^2/2\big)}$$

wherein R is an upper triangular matrix such that:

$$\Sigma(F)^{-1} = R^\dagger R$$

wherein $\rho$ is a scalar such that $E[zz^\dagger] = \rho I$, $I$ being an identity matrix of size $n$, and $E[.]$ representing the mathematical expectation,
and wherein $Q$ represents the Marcum's error function,
and **in that** the utility function $g$ has to be minimized.

12. The method according to any one of claims 1 to 7, **characterised in that**, the selected pre-filtering parameters being represented by a matrix $F$, the receiver implementing a successive interference cancellation decoder, the utility function $g$ depends on a Cholesky decomposition of the covariance matrix $\Sigma(F)$ and is such that:

$$g\big(\Sigma(F)\big) = \max\left(M_{i,i}\right)$$

wherein M is a matrix such that:

$$\Sigma(F) = M^\dagger M$$

13. The method according to any one of claims 8 to 12, **characterised in that** the pre-filtering parameters represented by the matrix $F$ are defined so as to perform zero-forcing $\Delta^{-1}$ on the linear fading transmission channel and then force the linear fading transmission channel 130 to be represented by the respective quantized channel matrix $\Delta_q$

as follows:

$$F = \Delta_q \Delta^{-1}$$

and the covariance matrix $\Sigma(F)$ is defined as follows:

$$\Sigma(F) = \Phi^{\dagger}\Delta_q\Delta^{-1}(\Delta^{-1})^{\dagger}\Delta_q{}^{\dagger}\Phi$$

**14.** The method according to any one of claims 8 to 12, **characterised in that** the pre-filtering parameters represented by the matrix $F$ are defined so as to perform minimum mean squared error pre-filtering and a filtering by the respective quantized channel matrix $\Delta_q$ as follows:

$$F = \rho\Delta_q\Delta^{\dagger}(\rho\Delta\Delta^{\dagger} + I)^{-1}$$

and the covariance matrix $\Sigma(F)$ is defined as follows:

$$\Sigma(F) = \rho\Phi^{\dagger}\Delta_q(\rho\Delta\Delta^{\dagger} + I)^{-1}\Delta_q{}^{\dagger}\Phi$$

wherein $\rho$ is a scalar such that $E[zz^{\dagger}] = \rho I$, $I$ being an identity matrix of size $n$, and $E[.]$ representing the mathematical expectation.

**15.** The method according to any one of claims 1 to 6, **characterised in that**, the selected pre-filtering parameters being represented by a matrix $F$, the receiver implementing a zero-forcing decoder, the utility function $g$ is defined as the probability that an equivalent noise $\eta'$ is outside a complex hypersquare $S = [-1/2, 1/2]^n, +j[-1/2, 1/2]^n$, wherein $j$ represents the imaginary unit, such that:

$$\eta' = \Phi^{\dagger}\big(F\Delta - \Delta_q\big)\Phi z + \Phi^{\dagger}F\eta$$

$$g(F) = E_z\left[\oint_{\eta' \notin S-m} \frac{1}{\pi^n \det(\Phi^{\dagger}FF^{\dagger}\Phi)} \exp(-\eta'^{\dagger}(\Phi^{\dagger}FF^{\dagger}\Phi)^{-1}\eta')\,d\eta'\right]$$

wherein $\eta$ is an additive complex white Gaussian noise vector with unitary variance components encountered by the received symbol vectors $y$ via the linear fading transmission channel,
and wherein m represents the mean of the equivalent noise $\eta'$ and is expressed as follows:

$$m = \Phi^{\dagger}\big(F\Delta - \Delta_q\big)\Phi z$$

and wherein $E_z[.]$ represents the mathematical expectation performed over all symbol vectors z that could possibly be transmitted by the wireless transmitter via the linear fading transmission channel,
and **in that** the pre-filtering parameters are numerically defined.

**16.** A configuring device for configuring a receiver in a communication system, the receiver being adapted to receive symbol vectors $y$ of size n resulting from a transmission of symbol vectors $z$ of size $n$ by a transmitter via a linear fading transmission channel, the configuring device comprising means for obtaining a channel matrix $\Delta$ representative

of observations of the linear fading transmission channel, **characterised in that** the configuring device further comprises:

- means for obtaining a list $L$ of candidate quantized channel matrices $\Delta_q$ satisfying the following relationship:

.

$$\Delta_q \Phi = \Phi \mathrm{T}$$

wherein $\Phi$ is a pre-coding matrix when the transmitter is adapted to apply pre-coding operations before transmitting the symbols via the linear fading transmission channel and equals identity otherwise, and wherein each matrix **T** is unimodular;
- means for determining, for each candidate quantized channel matrix $\Delta_q$, pre-filtering parameters by optimizing a utility function $g$ according to the pre-filtering parameters in view of said candidate quantized channel matrix $\Delta_q$ and of the channel matrix $\Delta$, the utility function $g$ being representative of the receiver performance in view of a selected candidate quantized channel matrix $\Delta_q$ and of the channel matrix $\Delta$;
- means for selecting one appropriate quantized channel matrix $\Delta_q$ of said list $L$ and the respective pre-filtering parameters according to results of the utility function $g$ determined for each candidate quantized channel matrix $\Delta_q$ and the respectively determined pre-filtering parameters; and
- means for configuring the receiver such that the receiver applies, onto the received symbol vectors $y$, a pre-filtering based on the selected pre-filtering parameters, and such that the receiver makes a decision on symbols $z' = Tz$ to enable further converting the symbols z' into estimates $\hat{z}$ of the symbols z.

110

111 → 112 ⟶ 130 ⟶ 121 → 122 → 123

120

Fig. 1

220

225

221 → 222 → 223 → 224

Fig. 2

300
CPU

301
RAM

302
ROM

303

304

310

Fig. 3

Obtaining a list of candidate quantized channel    S401

Selecting one candidate quantized channel    S402

Obtaining pre-filtering parameters for the selected quantized channel    S403

Determining the result of a utility function, relying on the pre-filtering parameters and on the selected candidate quantized channel    S404

yes    Other candidate?    no

S405

Selecting an appropriate candidate quantized channel and the corresponding pre-filtering parameters    S406

Configuring the wireless receiver    S407

Fig. 4

Receiving symbols via a linear fading transmission channel    S501

Applying the corresponding pre-filtering    S502

Applying a noise whitening filter    S503

Obtaining symbols estimates    S504

Fig. 5

Europäisches
Patentamt

European
Patent Office

Office européen
des brevets

# EUROPEAN SEARCH REPORT

Application Number

EP 14 17 6803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Robert F H Fischer: "From Gram-Schmidt Orthogonalization via Sorting and Quantization to Lattice Reduction", <br><br> , <br> 1 January 2010 (2010-01-01), XP055162270, Retrieved from the Internet: URL:http://www.lit.lnt.de/papers/jwcc_2010 .pdf [retrieved on 2015-01-15] * the whole document * <br> ----- | 1-16 | INV. <br> H04L25/03 <br> H04L25/02 |
| A | WO 2010/140134 A2 (ERICSSON TELEFON AB L M [SE]; KHAYRALLAH ALI S [US]) 9 December 2010 (2010-12-09) * abstract * * page 14, line 26 - page 15, line 10 * * claims 4,12 * * figure 5 * <br> ----- | 1-16 | |
| A | US 2009/047999 A1 (XIA PENGFEI [US] ET AL) 19 February 2009 (2009-02-19) * abstract * * paragraph [0005] - paragraph [0006] * * paragraph [0020] - paragraph [0028] * * paragraph [0038] - paragraph [0041] * * figure 1 * <br> ----- | 1-16 | TECHNICAL FIELDS SEARCHED (IPC) <br><br> H04L |

The present search report has been drawn up for all claims

| Place of search | Date of completion of the search | Examiner |
|---|---|---|
| Munich | 16 January 2015 | Schiffer, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

     .................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 14 17 6803

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2015

| Patent document cited in search report | | Publication date | Patent family member(s) | | Publication date |
|---|---|---|---|---|---|
| WO 2010140134 | A2 | 09-12-2010 | CN | 102461107 A | 16-05-2012 |
| | | | EP | 2438726 A2 | 11-04-2012 |
| | | | US | 2010309796 A1 | 09-12-2010 |
| | | | WO | 2010140134 A2 | 09-12-2010 |
| US 2009047999 | A1 | 19-02-2009 | NONE | | |

EPO FORM P0459

For more details about this annex : see Official Journal of the European Patent Office, No. 12/82